Europäisches Patentamt

European Patent Office

Office européen des brevets

(19)

(11) Veröffentlichungsnummer : **0 322 432 B1**

(12) # EUROPÄISCHE PATENTSCHRIFT

(45) Veröffentlichungstag der Patentschrift :
26.08.92 Patentblatt 92/35

(51) Int. Cl.⁵ : **G11B 27/10, G11B 27/00, G11B 27/28**

(21) Anmeldenummer : 88905367.4

(22) Anmeldetag : 01.06.88

(86) Internationale Anmeldenummer :
PCT/EP88/00488

(87) Internationale Veröffentlichungsnummer :
WO 88/09993 15.12.88 Gazette 88/27

(54) **CD-SPIELER.**

(30) Priorität : 09.06.87 DE 3719217

(43) Veröffentlichungstag der Anmeldung :
05.07.89 Patentblatt 89/27

(45) Bekanntmachung des Hinweises auf die
Patenterteilung :
26.08.92 Patentblatt 92/35

(84) Benannte Vertragsstaaten :
AT BE CH DE FR GB IT LI LU NL SE

(56) Entgegenhaltungen :
EP-A- 0 029 946
EP-A- 0 114 508

(56) Entgegenhaltungen :
EP-A- 0 169 597
EP-A- 0 215 133
BE-A- 897 174
Funkschau, vol. 58, No: 15, July 1986 (München, DE) R. Auer: "CD-Mastering-Prozess: Zusammenstellen eines CD-Programms",pages 26-28, see the whole document cited in the application

(73) Patentinhaber : Deutsche Thomson-Brandt GmbH
Hermann-Schwer-Strasse 3 Postfach 1307
W-7730 Villingen-Schwenningen (DE)

(72) Erfinder : BAAS, Dieter
Sofienstrasse 19
W-7640 Kehl (DE)

EP 0 322 432 B1

## Beschreibung

Die Erfindung betrifft einen CD-Spieler, bei dem jeweils der erste Index der einzelnen auf einer CD-Platte aufgezeichneten Programmblöcke gespeichert wird.

In dem Aufsatz "Zusammenstellen eines CD-Programms" aus Funkschau 15, 18.07.1986 ist auf Seite 26 bis 28 beschrieben, welche Daten auf einer CD-Platte gespeichert sind.

Jede CD-Platte enthält ein Inhaltsverzeichnis, in dem Daten gespeichert sind, die Auskunft geben über die Anzahl der auf der Platte gespeicherten Programmblöcke, deren Anfangszeiten sowie über die Gesamtspieldauer der Platte. Die einzelnen Programmblöcke sind in der Regel Musikstücke, doch kann es sich z.B. auch um gesprochenen Text oder verschiedene Geräuschkulissen für die Vertonung von Filmen oder Dias handeln. Auf einer CD-Platte können bis zu 99 Programmblöcke abgespeichert sein, jedoch finden sich auf einer CD-Platte mit Musik meist nur 10 bis 20 verschiedene Musikstücke.

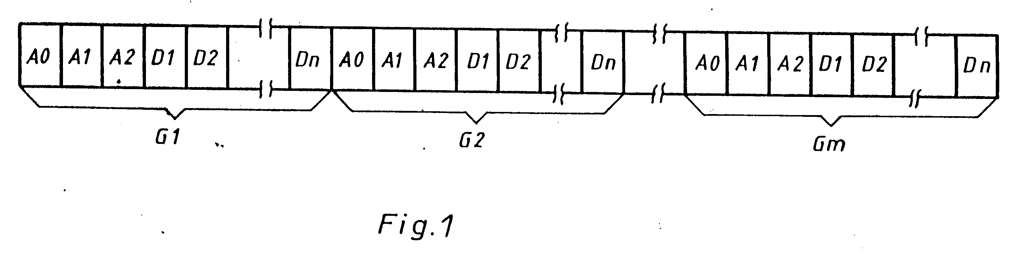

Das Inhaltsverzeichnis einer CD-Platte hat das in der Figur 1 dargestellt Datenformat. Im ersten Block A0 steht der Titel des ersten Musikstücks, im zweiten Block A1 der des letzten Musikstücks, und im dritten Block A3 ist die Gesamtspieldauer der CD-Platte angegeben. In den folgenden Blöcken D1 bis Dn stehen die Startzeiten der einzelnen n Musikstücke, die auf der CD-Platte aufgezeichnet sind; die Blöcke A0, A1, A2, D1 - Dn sind zu einer Gruppe zusammengefaßt, in der das Inhaltsverzeichnis der CD-Platte einmal vollständig gespeichert ist.

Der gesamte auf einer CD-Platte für das Inhaltsverzeichnis vorgesehene Speicherraum, der als Einlaufspur bezeichnet wird, ist vollständig mit mehreren dieser unmittelbar aufeinanderfolgenden Gruppen belegt, so daß die Daten des Inhaltsverzeichnisses der CD-Platte mehrfach redundant gespeichert sind.

Beim Spielen der CD-Platte dienen die Startzeitpunkte D1 - Dn, die bei mehr als drei Musikstücken den größten Teil der im Inhaltsverzeichnis gespeicherten Daten ausmachen, zur Berechnung der Anfangszeiten der einzelnen Musikstücke.

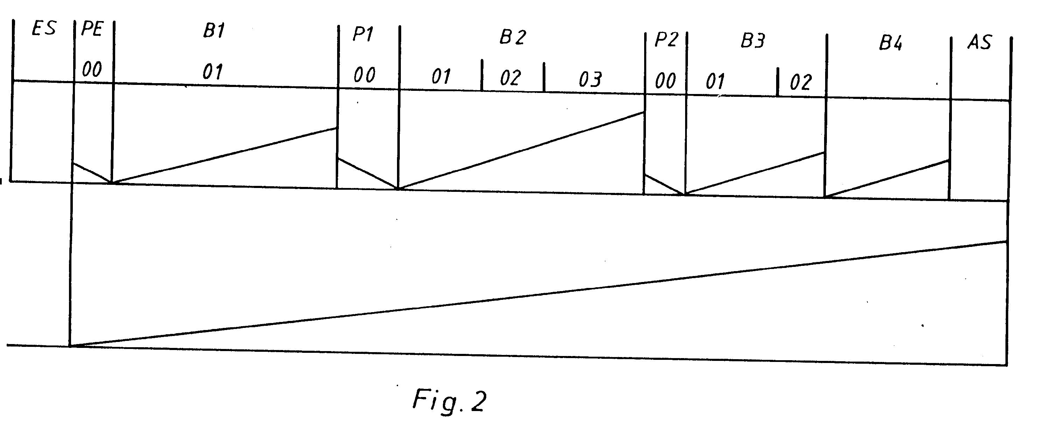

Wie in Figur 2 gezeigt ist, folgt auf die Einlaufspur ES eine Pause PE, deren Dauer zu zwei bis drei Sekunden festgelegt ist. An die Pause PE schließen sich die einzelnen Programmblöcke, beispielsweise wie in Figur 2, vier Musikstücke B1, B2, B3 und B4 an. Auf den letzten Programmblock, das Musikstück B4, folgt die Auslaufspur AS. Die einzelnen Programmblöcke können durch Pausen, deren Dauer nicht normiert ist, voneinander getrennt sein. In der Figur 2 liegt zwischen dem ersten Programmblock B1 und dem zweiten Programmblock B2 eine Pause P1 sowie zwischen dem zweiten Programmblock B2 und dem dritten Programmblock B3 eine Pause P2, während der vierte Programmblock B4 unmittelbar auf den dritten Programmblock B3 folgt. Die Pause P1 ist z.B. größer gewählt als die pause P2.

Jeder Programmblock ist zur Unterscheidung von den anderen durch eine Nummer gekennzeichnet, an welcher der CD-Spieler erkennt, welchen Programmblock seine Abtastvorrichtung gerade abtastet. Zusätzlich ist jeder Programmblock mit mindestens einem, höchstens jedoch 99 Indizes versehen, durch die ein Programmblock in bis zu 99 Teile beliebiger Länge unterteilt werden kann. Die Indizes eines Programmblocks laufen von 01 bis 99, dagegen von 00 bis 99, wenn eine Pause zwischen zwei Programmblöcken vorgesehen ist. Einer Pause ist stets der Index 00 zugeordnet.

In der Figur 2 hat z.B. der Programmblock B1 nur einen Index 01, der Programmblock B2 ist durch die Indizes 01, 02 und 03 in drei Teile, der Programmblock B3 durch die Indizes 01 und 02 zwei Teile unterteilt, während der Programmblock B4 wiederum nur mit einem Index 01 versehen ist.

Vom Ende der Einlaufspur ES bis zum Ende der Auslaufspur AS ist parallel die Zeit abgespeichert, welche die Spieldauer der CD-Platte anzeigt. Auf die gleiche Weise ist innerhalb eines jeden Programmblocks jeweils mit der Zeit $t = 0$ beginnend die Zeit abgespeichert, welche die Spieldauer des betreffenden Programmblocks anzeigt. Parallel zu jeder zwischen zwei Programmblöcken liegenden Pause ist die Pausenlänge gespeichert, die zu Beginn der Pause jedoch mit der Pausendauer beginnt und am Ende der Pause mit dem Wert Null endet. Hier wird die Zeit wie bei einem Count-Down abwärts gezählt. Deshalb stehen dem CD-Spieler, dessen Lichtstrahl gerade eine Stelle in einem Programmblock abtastet, folgende vier Informationen zur Verfügung:

Die vom Ende der Einlaufspur ES bis zur betreffenden Stelle verstrichene Spielzeit,

die vom Beginn des Programmblocks bis zur betreffenden Stelle vergangene Zeit,

die Nummer des Programmblocks,

der zur betreffenden Stelle gehörende Index.

Fällt der abtastende Lichtstrahlt auf eine Pause zwischen zwei Programmblöcken, so stehen die folgenden drei Informationen zur Verfügung:

Der Index 00, der eine Pause anzeigt,

die vom Ende der Einlaufspur ES bis zu der betreffenden Stelle in der Pause verstrichene Spieldauer,

wie lange die Pause noch dauert oder anders ausgedrückt, nach wievielen Sekunden der nächste Programmblock beginnt.

Die mögliche Einteilung eines Programmblocks in bis zu 99 Indizes ist besonders bei längeren Musikwerken oder bei Werken der Literatur vorteilhaft. Der CD-Hersteller kann beispielsweise in einer Oper die Soli - Klaviersoli oder Soli einer bestimmten Sängerin - , die Arien, die Duette oder die Chöre mittels der Indizes kennzeichnen. Bei Werken der Literatur lassen sich z.B. Monologe öder Dialoge bestimmter Personen mittels der Indizes kennzeichnen.

Es ist daher Aufgabe der Erfindung, einen CD-Spieler so zu gestalten, daß er eine Auswertung der Indizes ermöglicht und gleichzeitig eine Verkürzung der Zugriffszeiten erzielt wird.

Die Erfindung löst diese Aufgabe dadurch, daß die Indizes der einzelnen auf einer CD-Platte aufgezeichneten Programmblöcke sowie deren Anfangs- und Endzeiten in einem Speicher speicherbar sind und daß die Endzeit der Einlaufspur der eingelegten CD-Platte gespeichert wird.

Anhand eine ersten Ausführungsbeispiels wird die Erfindung nun erläutert.

Nach dem Einlegen einer CD-Platte wird zunächst, wie üblich, deren Inhaltsverzeichnis gelesen. Anschließend wird die CD-Platte schrittweise abgetastet, um die Indizes der einzelnen Programmblöcke, z.B. einzelner Musikstücke mit den zugehörenden Anfangs- und Endzeiten zu speichern. Der Hörer hat deshalb die Möglichkeit, bestimmte Stellen innerhalt eines Musikstücks, z.B. die Soli einer bestimmten Sängerin anzuwählen und nacheinander zu hören, vorausgesetzt diese Soli sind durch Indizes auf der CD-Platte gekennzeichnet.

Ein Vorteil der Erfindung besteht darin, daß aus den gespeicherten Anfangs- und Endzeiten der Indizes die Sprungweite der optischen Abtastvorrichtung bei Anwahl eines bestimmten Musikstücks oder einer bestimmten Stelle innerhalb dieses Musikstücks genauer berechnet werden kann, als es mit dem im Inhaltsverzeichnis stehenden Daten möglich ist, weil im Inhaltsverzeichnis gerade diese Anfangs- und Endzeiten sowie die Längen der einzelnen Pausen zwischen den Musikstücken nicht angegeben sind. Sind die Pausenlängen dagegen bekannt, weil sie wie bei der Erfindung aus den Anfangs- und Endzeiten der Indizes berechnet werden, so werden die Zugriffszeiten auf gewünschte Musikstücke verringert. Außerdem kann die Restspieldauer eines gerade spielenden Musikstücks oder einer Programmfolge genauer angezeigt werden. Die Restspieldauer und die gesamte Spielzeit eines gerade spielenden Indizes können ebenfalls angezeigt werden.

Die Endzeit der Einlaufspur ES wird ebenfalls gespeichert. Diese Maßnahme führt zu einer Verringerung der Zugriffszeiten, weil weder die Länge der Einlaufspur ES normiert ist noch ihrem Beginn die Zeit Null zugeordnet sein muß. Die Einlaufspur kann beispielsweise bei der Zeit 12s beginnen und bei der Zeit 50s, der gespeicherten Endzeit, enden.

Bei einem zweiten Ausführungsbeispiel werden die Indizes und die zugehörenden Anfangs- und Endzeiten während des Abspielens der CD-Platte automatisch in einem Speicher gespeichert. Besonders vorteilhaft ist eine Kombination aus dem ersten und dem zweiten Ausführungsbeispiel, die dem Hörer die Wahl bietet, zuerst die Indizes und deren Anfangs- und Endzeiten zu speichern oder sofort die CD-Platte anzuhören.

Bei einem weiteren Ausführungsbeispiel werden im Speicher die Indizes sowie deren Anfangs- und Endzeiten mehrerer CD-Platten nach CD-Platten geordnet und gekennzeichnet gespeichert.

Besonders vorteilhaft ist es, für diesen Zweck einen residenten Speicher vorzusehen, weil sowohl die gespeicherten Indizes sowie deren Anfangs- und Endzeiten als auch die Endzeit der Einlaufspuren durch Ausschalten des CD-Spielers nicht verloren gehen. Sie stehen beim Wiedereinschalten sofort zur Verfügung.

**Patentansprüche**

1.  CD-Spieler, bei dem jeweils der erste Index (01) der einzelnen auf einer CD-Platte aufgezeichneten Programmblöcke (B1, B2, B3, B4) gespeichert wird, **dadurch gekennzeichnet**, daß die restlichen Indizes (02, 03) der einzelnen auf der CD-Platte aufgezeichneten Programmblöcke (B1, B2, B3, B4) sowie deren Anfangs- und Endzeiten in einem Speicher speicherbar sind und daß die Endzeit der Einlaufspur (ES) der eingelegten CD-Platte gespeichert wird.

2.  CD-Spieler nach Anspruch 1 oder 2, **dadurch gekennzeichnet**, daß nach dem Einlegen einer CD-Platte die Indizes (01, 02, 03) der einzelnen Programmblöcke (B1, B2, B3, B4) und deren Anfangs- und Endzeiten in einem Speicher gespeichert werden.

3.  CD-Spieler nach Anspruch 1, **dadurch gekennzeichnet**, daß während des Abspielens einer CD-Platte die Indizes (01, 02, 03) der einzelnen Programmblöcke (B1, B2, B3, B4) und deren Anfangs- und Endzeiten in einem Speicher gespeichert werden.

4.  CD-Spieler nach Anspruch 1, 2 oder 3, **dadurch gekennzeichnet**, daß aus den gespeicherten Anfangs- und Endzeiten der einzelnen Indizes (01, 02, 03) der einzelnen Programmblöcke (B1, B2, B3, B4) die Sprungweite der optischen Abtastvorrichtung des CD-Spielers bei Anwahl eines gewünschten Programmblocks berechnet wird.

5. CD-Spieler nach Anspruch 1, 2, 3 oder 4, **dadurch gekennzeichnet**, daß aus den gespeicherten Anfangs- und Endzeiten der Indizes (01, 02, 03) der einzelnen Programmblöcke (B1, B2, B3, B4) die Sprungweite der optischen Abtastvorrichtung des CD-Spielers bei Anwahl einer gewünschten Stelle innerhalb eines Programmblocks berechnet wird.

6. CD-Spieler nach Anspruch 1, 2, 3, 4, oder 5, **dadurch gekennzeichnet**, daß die Indizes (01, 02, 03) sowie deren Anfangs- und Endzeiten mehrerer CD-Platten jeweils nach den CD-Platten gekennzeichnet speicherbar sind.

7. CD-Spieler nach Anspruch 1, 2, 3, 4, 5 oder 6, **dadurch gekennzeichnet**, daß zur Speicherung der Indizes (01, 02, 03) und deren Anfangs- und Endzeiten ein residenter Speicher vorgesehen ist, so daß die gespeicherten Indizes (01, 02, 03) sowie deren Anfangs- und Endzeiten durch Abschalten des CD-Spielers nicht verloren gehen.

## Claims

1. A CD player, in which in each case the first index (01) of the individual program blocks (B1, B2, B3, B4) which are recorded on a CD disc is stored, **characterised in that** the remaining indices (02, 03) of the individual program blocks (B1, B2, B3, B4) which are recorded on the CD disc and their beginning and end times can be stored in a store and that the end time of the run-in track (ES) of the CD disc inserted is stored.

2. A CD player according to claim 1 or 2, **characterised in that** after inserting a CD disc the indices (01, 02, 03) of the individual program blocks (B1, B2, B3, B4) and their beginning and end times are stored in a memory.

3. A CD player according to claim 1, **characterised in that** while playing a CD disc the indices (01, 02, 03) of the individual program blocks (B1, B2, B3, B4) and their beginning and end times are stored in a memory.

4. A CD player according to claim 1, 2 or 3, characterised in that from the stored beginning and end times of the individual indices (01, 02, 03) of the individual program blocks ( B1, B2, B3, B4 ) the jump distance of the optical scanning device of the CD player is calculated when selecting a desired program block.

5. A CD player according to claim 1, 2, 3 or 4, **characterised in that** from the stored beginning and end times of the indices (01, 02, 03) of the individual program blocks (B1, B2, B3, B4) the jump distance of the optical scanning device of the CD player is calculated when selecting a desired position within a program block.

6. A CD player according to claim 1, 2, 3, 4 or 5, **characterised in that** the indices (01, 02, 03) and their beginning and end times of a plurality of CD discs can be stored in each case identified according to the CD discs.

7. A CD player according to claim 1, 2, 3, 4, 5 or 6, **characterised in that** in order to store the indices (01, 02, 03) and their beginning and end times a resident store is provided, so that the stored indices (01, 02, 03) and their beginning and end times are not lost by switching off the CD player.

## Revendications

1. Lecteur de disques compacts dans lequel le premier indice (01) des différents blocs de programme (B1, B2, B3, B4) enregistrés sur un disque compact est respectivement mis en mémoire, **caractérisé en ce** que les autres indices (02, 03) des différents blocs de programme (B1, B2, B3, B4) enregistrés sur le disque compact ainsi que leurs temps de début et de fin peuvent être mémorisés dans une mémoire et que le temps de fin de la piste d'entrée (ES) du disque compact mis en place est mis en mémoire.

2. Lecteur de disques compacts selon la revendication 1 ou 2, **caractérisé en ce** qu'après avoir mis en place un disque compact, les indices (01, 02, 03) des différents blocs de programme (B1, B2, B3, B4) et leurs temps de début et de fin sont mémorisés dans une mémoire.

3. Lecteur de disques compacts selon la revendication 1. **caractérisé en ce** que les indices (01, 02, 03) des différents blocs de programme (B1, B2, B3, B4) et leurs temps de début et de fin sont mémorisés dans une mémoire pendant la lecture d'un disque compact.

4. Lecteur de disques compacts selon la revendication 1, 2 ou 3, **caractérisé en ce** que la largeur du saut du dispositif de balayage optique du lecteur de disques compacts est calculée à partir des temps de début et de fin mémorisés des différents indices (01, 02, 03) des différents blocs de programme (B1, B2, B3, B4) lors de la sélection d'un bloc de programme souhaité.

5. Lecteur de disques compacts selon la revendication 1, 2, 3 ou 4, caractérisé en ce que largeur du saut du dispositif de balayage optique du lecteur de disques compacts est calculée à partir des temps de début et de fin mémorisés des indices (01, 02, 03) des différents blocs de programme (B1, B2, B3, B4) lors de la sélection d'un endroit désiré à l'intérieur d'un bloc de programme.

6. Lecteur de disques compacts selon la revendication 1, 2, 3, 4 ou 5, **caractérisé en ce** que les indices (01, 02, 03) ainsi que leurs temps de début et de fin de plusieurs disques compacts peuvent être mémorisés en étant caractérisés respectivement par disque compact.

7. Lecteur de disques compacts selon la revendication 1, 2, 3, 4, 5 ou 6, **caractérisé en ce** qu'une mémoire résidente est prévue pour la mise en mémoire des indices (01, 02, 03) et de leurs temps de début et de fin si bien que les indices mémorisés (01, 02, 03) ainsi que leurs temps de début et de fin ne sont pas perdus lors de la déconnexion du lecteur de disques compacts.

| A0 | A1 | A2 | D1 | D2 | | Dn | A0 | A1 | A2 | D1 | D2 | | Dn | | | A0 | A1 | A2 | D1 | D2 | | Dn |

G1                     G2                   Gm

*Fig.1*

EP 0 322 432 B1

EP 0 322 432 B1

| ES | PE | | B1 | P1 | | B2 | | | P2 | B3 | | B4 | AS |
|----|-----|----|------|-----|----|----|----|----|-----|----|----|------|-----|
|    | 00 |    | 01  | 00 | 01 | 02 | 03 | | 00 | 01 | 02 | | |

Fig. 2